# EUROPÄISCHE PATENTANMELDUNG

(11) **EP 2 228 335 A2**
(43) Veröffentlichungstag der Anmeldung: **15.09.2010**
(21) Anmeldenummer: 10002330.8
(22) Anmeldetag: 05.03.2010
(51) Int. Cl.: B66F 9/20, B63B 27/16, B60P 1/44

(54) **Heb- und senkbare Plattformeinrichtung für den Anbau an ein Fahrzeug, insbesondere an ein Landfahrzeug oder an ein Wasserfahrzeug**

(30) Priorität: 11.03.2009 DE 102009013626
(71) Anmelder: Gerd Bär GmbH, 74078 Heilbronn (DE)
(72) Erfinder: Bär, Gerd, 74078 Heilbronn (DE)
(74) Vertreter: Dreiss

(57) **Zusammenfassung**

Die Erfindung betrifft eine Plattformeinrichtung (4) mit einer heb- und senkbaren Plattform (6), für den Anbau an ein Fahrzeug, insbesondere ein Wasserfahrzeug (2), nach Art einer Hubladebühne, mit einem parallelogrammförmigen Hubwerk (10) umfassend ein oberes und einen unteres Tragarmsystem, das einenends an das Fahrzeug anbaubar ist und anderenends die Plattform (6) trägt, die in allen Hubstellungen eine im wesentlichen horizontale begehbare Oberfläche (8) aufweist; die Plattformeinrichtung wird dahingehend weitergebildet, dass das untere und/oder das obere Tragarmsystem jeweils von einem einzigen Tragarm gebildet ist, der von jeweils einer einzigen im wesentlichen quader- oder kastenförmigen torsionssteifen Struktur (20, 22) gebildet ist, die in sich schubfeste flächenhaft erstreckte Seiten umfasst, die starr miteinander verbunden oder teilweise einstückig ineinander übergehend ausgebildet sind und so die Torsionssteifigkeit des Tragarms (16, 18) unterstützen.

## Beschreibung

### Beschreibung

Die Erfindung betrifft eine heb- und senkbare Plattformeinrichtung für den Anbau an ein Fahrzeug, insbesondere an ein Landfahrzeug oder an ein Wasserfahrzeug, nach Art einer Hubladebühne, mit einem parallelogrammförmigen Hubwerk umfassend ein oberes und ein unteres Tragarmsystem, das einenends an das Fahrzeug anbaubar ist und anderenends die Plattform trägt, die in allen Hubstellungen eine im wesentlichen horizontale begehbare Oberfläche aufweist.

Wasserfahrzeuge, insbesondere Sportboote, wie Motoryachten, mit heb- und senkbaren Plattformeinreichungen sind bereits bekannt. Diese Plattformeinrichtungen dienen als Schwimmplattform oder zum Ablassen und Wiederaufnehmen eines Beiboots. Sie sind vom grundsätzlichen Prinzip her nach Art einer Hubladebühne ausgebildet, wie sie für den Anbau an Lastkraftfahrzeuge zu Land bekannt und üblich ist. Allerdings ist die Plattform von Wasserfahrzeugen in der Regel als Schwimmplattform nur heb- und senkbar, während sie bei Landfahrzeugen häufig zusätzlich in eine vertikale Stellung bringbar oder in sich faltbar ausgebildet ist.

Das Hubwerk bekannter heb- und senkbarer Plattformeinrichtungen zu Wasser wie zu Lande umfasst typischerweise in Querrichtung voneinander beabstandet ein linkes und ein rechtes Tragarmsystem, welche fahrzeugseitig über eine Flanschkonsole an einen hinteren Bereich des Fahrzeugs montiert sind und plattformseitig links und rechts die Plattform mittelbar oder unmittelbar tragen. Bei einem parallelogrammförmigen Hubwerk ist dann auf jeder Seite ein oberer und ein unterer Tragarm vorgesehen, der von einem Flacheisen oder Profilstab oder im Fall von Landfahrzeugen von einem Neigezylinder gebildet ist und die obere bzw. untere Parallelogrammstrebe des Hubwerks bildet. Gemäß US 5,613,462 ist bei einer Ausführungsform ein oberer Tragarm und ein unterer Tragarm jeweils von einer ebenen Rohrrahmenkonstruktion gebildet, die zwar schmal baut, jedoch aufgrund der ebenen Ausbildung der Tragarme nicht verwindungssteif ist und nur für kleinste Plattformen und Belastungen hinreichende Stabilität bildet.

Beim Anbau von Plattformeinrichtungen an Wasserfahrzeuge stellt sich regelmäßig das Problem, dass die heb- und senkbare Plattform ja nicht mit Antriebskomponenten, wie Propellern, Querstrahlrudern oder Stabilisatoren des Wasserfahrzeugs kollidieren darf. Insbesondere bei links und rechts vorgesehenen sogenannten Z-Antrieben bei Motoryachten ist der Bauraum für das parallelogrammförmige Hubwerk zwischen diesen beiden Z-Antrieben oft begrenzt. Insbesondere wenn dennoch eine in Breitenrichtung ausladende Plattform verwendet werden soll, führen bei einseitiger Belastung der Plattform eingeleitete Momente zu einer Verwindung des Gesamtsystems, die problematisch sein kann.

Der vorliegenden Erfindung liegt die Aufgabe zugrunde, eine Plattformeinrichtung der eingangs genannten Art bereit zu stellen, bei der das Hubwerk in Breitenrichtung verhältnismäßig schmal bauen kann, wobei dennoch die im Betrieb typischerweise auftretenden Belastungen problemlos aufgenommen werden können.

Diese Aufgabe wird bei einer Plattformeinrichtung der genannten Art erfindungsgemäß dadurch gelöst, dass der untere und/oder der obere Tragarm (und vorzugsweise beide Tragarme) von jeweils einer einzigen im wesentlichen quader- oder kastenförmigen torsionssteifen Struktur gebildet ist, die in sich schubfeste flächenhaft erstreckte Seiten umfasst, die starr miteinander verbunden oder teilweise einstückig ineinander übergehend ausgebildet sind und so die Torsionssteifigkeit des Tragarms unterstützen.

In Abkehr von der seitherigen bekannten Ausbildung des Hubwerks und dessen Tragarmsystemen mit in Querrichtung voneinander beabstandeten Tragarmen, die insbesondere bei schmal bauenden Hubwerken und breit bauenden Plattformen Probleme im Hinblick auf die Verwindungsstabilität des Gesamtsystems mit sich bringen, wird erfindungsgemäß vorgeschlagen, bei dem parallelogrammförmigen Hubwerk das untere und/oder das obere Tragarmsystem und vorzugsweise beide Tragarmsysteme jeweils durch einen einzigen Tragarm auszubilden, der erfindungsgemäß von einer im wesentlichen quader- oder kastenförmigen torsionssteifen Struktur gebildet ist. Der Begriff quaderförmig oder kastenförmig ist vorliegend nicht im streng geometrischen Sinn zu verstehen; sondern er bedeutet, dass anstelle von zwei in verhältnismäßig großem Querabstand zueinander angeordneten, langgestreckten und schmalbauenden Tragarmen des Hubwerks eine einzige zusammenhängende Tragarmstruktur mit in sich schubfesten Seiten verwendet wird. Es wurde erfindungsgemäß festgestellt, dass auf diese Weise, eine verhältnismäßig schmalbauende Hubwerkskonstruktion möglich ist, die sich bei einer größeren Anzahl von Wasserfahrzeugen mit Doppel-Z-Antrieb in der Anbausituation adaptieren lässt. Durch die erfindungsgemäße Ausbildung der Plattformeinrichtung lässt sich hinsichtlich der Breitenverhältnisse von Plattform und Hubwerk eine größere Freiheit erreichen, die es gestattet, verhältnismäßig wenige Lösungen der Ausgestaltung des Hubwerks und seiner Anschlusskomponenten gewissermaßen baukastenartig vorzuhalten, welche dann für eine größere Anzahl von Anbausituationen gleichwohl geeignet sind, ohne dass sich Probleme im Hinblick auf Verwindungen der Gesamtkonstruktion ergeben.

Die erwähnte im wesentlichen quader- oder kastenförmige torsionssteife Struktur zur Bildung des unteren und/oder des oberen Tragarms ist in vorteilhafterweise eine Hohlkörperstruktur, die sich in Folge der schubfesten Seiten als optimal geeignet erweist.

Im Hinblick auf eine größtmögliche Verwindungssteifigkeit ereist es sich als vorteilhaft, wenn die im wesentlichen quader- oder kastenförmige torsionssteife Struktur sechs in sich schubfeste Seiten aufweist.

Nach einer bevorzugten Ausbildung der Erfindung ist die torsionssteife Struktur nach allen sechs Seiten durch flächenhaft erstreckte Wandungsabschnitte geschlossen ausgebildet oder begrenzt (Anspruch 2). Dies bedeutet jedoch nicht, dass die Struktur oder der Tragarm flüssigkeitsdicht ausgebildet ist oder die flächenhaft erstreckten Wandungsabschnitte nicht ihrerseits Öffnungen aufweisen dürfen.

In weiterer Ausbildung der Erfindung wird vorgeschlagen, dass die Länge der torsionssteifen Struktur 60-110 cm, insbesondere 80-90 cm beträgt, dass die Breite der Struktur 40-70 cm, insbesondere 44-60 cm beträgt und dass die Höhe der Struktur 6-12 cm, insbesondere 8-11 cm beträgt. - Die Breite der Plattform kann durchaus wenigstens 300 cm, insbesondere wenigstens 350 cm, insbesondere 400 cm und darüber betragen.

Nach einer weiteren bevorzugten Ausführungsform der Erfindung ist das Hubwerk weiter so ausgebildet, dass der von der torsionssteifen Struktur gebildete Tragarm zwischen (Innen)Schenkeln zweier Flanschkonsolen des Hubwerks schwenkbar angelenkt ist (Anspruch 3).

Hierfür erweist es sich als besonders vorteilhaft, wenn der obere und der untere Tragarm über ein eine fahrzeugseitige Parallelogrammstrebe bildendes Basisteil miteinander verbunden sind, wobei das Basisteil gegenüber den Flanschkonsolen verschwenkbar ist, so wie dies gemäß DE 10 2007 058 908.7 der Anmelderin beschrieben und geschützt ist. Auf diese Weise kann die Plattformeinrichtung mit ihren Flanschkonsolen an unterschiedlich geneigten Heckpartien von Fahrzeugen adaptiert werden. Auf die in DE 2007 058 908.7 beschriebene Ausbildung der Anlenkung der Tragarme an die fahrzeugseitigen Flanschkonsolen unter Verwendung eines gegenüber den Flanschkonsolen begrenzt verschwenkbaren Basisteils, welches zugleich die fahrzeugseitige vertikale Parallelogrammstrebe bildet, wird inhaltlich Bezug genommen, und die Offenbarung dieser Anmeldung wird durch Bezugnahme in die vorliegende Anmeldung einbezogen (Anspruch 4 der vorliegenden Anmeldung).

Im Hinblick auf die an verschiedene Anbausituationen adaptierbare Lösung erweist es sich als vorteilhaft, wenn die obere und die untere fahrzeugseitige Schwenkachse der Tragarme auf dem selben Umkreis um die erwähnte horizontale Schwenkachse des Basisteils liegen (Anspruch 5).

Weiter erweist es sich als vorteilhaft, wenn das Basisteil gegenüber der Flanschkonsole stufenlos um wenigstens 5°, um wenigstens 10°, insbesondere um wenigstens 15°, insbesondere um wenigstens 20°, insbesondere um wenigstens 30° um seine horizontale Schwenkachse verschwenkbar ist und in beliebiger Schwenkstellung gegenüber der Flanschkonsole fixierbar ist (Anspruch 6).

Zum Heben und Senken der Plattform bzw. des parallelogrammförmigen Hubwerks ist des Weiteren ein vorzugsweise hydraulischer Hubzylinder vorgesehen, wobei der Begriff Hubzylinder hier gewissermaßen stellvertretend auch für andere Kraftantriebe, beispielsweise elektromotorischer Art steht, worauf ausdrücklich hingewiesen wird.

Der Kraftantrieb bzw. Hubzylinder ist kinematisch zwischen einem Tragarm des Hubwerks und entweder dem anderen Tragarm oder der fahrzeugfesten Flanschkonsole angeordnet. Hierfür könnte beispielsweise an dem einen Tragarm eine Lagerlasche an einer Seite oder zu beiden Seiten angeschweißt sein. In Weiterbildung der Erfindung von besonderer Bedeutung erweist es sich indessen als vorteilhaft, dass in dem von der torsionssteifen Struktur gebildeten Tragarm eine Öffnung ausgebildet ist, in die der Hubzylinder des Hubwerks eingreift und dort mit seinem plattformseitigen Ende schwenkbar angelenkt ist (Anspruch 7). Auf diese Weise kann trotz Ausbildung des Tragarms als torsionssteife quader- oder kastenförmige Struktur der Bauraum des Hubwerks in horizontaler Ebene als auch in der Höhe optimal ausgenutzt bzw. reduziert werden.

Zur Anlenkung des plattformseitigen Endes des Hubzylinders an den Tragarm erweist es sich als vorteilhaft, wenn sich durch die Öffnung in dem Tragarm eine Lagerachse in Querrichtung hindurcherstreckt (Anspruch 8).

Da eine Öffnung, insbesondere eine in vertikaler Richtung durchgehende Durchgangsöffnung in dem Tragarm wiederum zu einer Reduzierung der Verwindungssteifigkeit des Tragarms führen kann, erweist es sich als vorteilhaft, wenn die Öffnung von im wesentlichen senkrecht zur Öffnungsebene erstreckten Wandungen begrenzt ist, die die Torsionssteifigkeit des Tragarms dann weiter unterstützen bzw. erhöhen (Anspruch 9). Die zusätzlich vorgesehene Öffnung in der quader- oder kastenförmigen Struktur des Tragarms kann sich solchenfalls sogar als zusätzlich torsionsversteifend auswirken verglichen mit einer Ausbildung der quader- oder kastenförmigen Struktur ohne eine solche Öffnung.

Die erwähnten die Öffnung begrenzenden Wandungen können in weiterer Ausbildung der Erfindung dahingehend ausgebildet sein, dass sie die in Querrichtung durch die Öffnung hindurch erstreckte Lagerachse für das plattformseitige Ende des Hubzylinders lagern und stützen (Anspruch 10).

Wie erwähnt, kann der Hubzylinder mit seinem fahrzeugseitigen Ende an einer durch den anderen Tragarm hindurchgehenden Lagerachse oder an einer durch den anderen Tragarm und durch beide Flanschkonsolen hindurchgehenden Lagerachse vorgesehen sein (Anspruch 11).

Bei der letztgenannten Ausführungsform erweist es sich als vorteilhaft, wenn die durch beide Flanschkonsolen und durch den Tragarm hindurchgehende Lagerachse in einem mittigen Abschnitt zusätzlich von dem Tragarm gegen Durchbiegen gestützt ist (Anspruch 12). Hierfür sind in dem Tragarm vorzugsweise Rippen oder Wangen im Inneren vorgesehen, welche eine zusätzliche Lagerstelle für die fahrzeugseitige Lagerachse des Hubzylinders bilden. Im erstgenannten Fall erweist es sich als vorteilhaft, wenn der andere Tragarm in entsprechender Weise eine Öffnung mit einer die Öffnung begrenzenden Wandung aufweist, welche Wandung dann die fahrzeugseitige Lagerachse des Hubzylinders lagern und stützen kann.

In weiterer Ausbildung der Erfindung erweist es sich als vorteilhaft, wenn in beiden Tragarmen eine Öffnung zur Aufnahme und Lagerung des Hubzylinders ausgebildet ist, insbesondere beide Tragarme zumindest hinsichtlich der Ausbildung der torsionssteifen Struktur und der Öffnung identisch ausgebildet sind (Anspruch 13).

Zur Ausbildung der im wesentlichen quader- oder kastenförmigen torsionssteifen Struktur erweist es sich als vorteilhaft, wenn die Struktur miteinander gefügte Flachmaterialabschnitte, insbesondere aus Aluminium, umfasst oder aus solchen miteinander gefügten Flachmaterialabschnitten besteht. Insbesondere lassen sich diese Flachmaterialabschnitte zur Ausbildung der Seiten der Struktur abkanten und miteinander verschweißen. Auf diese Weise lässt sich eine kastenförmige Struktur mit hoher Verwindungssteifigkeit herstellen.

Es wäre aber auch denkbar, dass die im wesentlichen quader- oder kastenförmige torsionssteife Struktur zwei parallel zueinander und in Längsrichtung erstreckte Hohlprofile und zwei parallel zueinander und in Querrichtung erstreckte Hohlprofile umfasst, die starr aneinander gefügt sind (Anspruch 14).

In diesem Fall ist die torsionssteife Struktur durch Aneinanderfügen, vorzugsweise Verschweißen von wenigstens vier Hohlprofilen miteinander gebildet. Auch auf diese Weise lässt sich eine torsionssteife Struktur mit in sich schubfesten Seiten herstellen.

In diesem Fall kann es sich als vorteilhaft erweisen, dass in dem oder den in Querrichtung erstreckten Hohlprofilen eine Lagerstelle zum Anlenken des Tragarms an die Flanschkonsole oder an ein gegenüber der Flanschkonsole verschwenkbares Basisteil, welches solchenfalls die fahrzeugseitige vertikale Strebe des Parallelogramms bildet, ausgebildet ist.

Die Schnittstelle zwischen Hubwerk und Plattform ist bei der erfindungsgemäßen Plattformeinrichtung in Weiterbildung der Erfindung derart ausgebildet, dass das Hubwerk auf seiner fahrzeugabgewandten Seite mit einer Plattformkonsole für die begehbare Plattform verbunden ist und diese trägt und dass die Plattformkonsole verwindungssteif mit in sich schubfesten Seiten ausgebildet ist (Anspruch 15). Auch auf diese Weise lässt sich eine Erhöhung der Torsionsfestigkeit des Gesamtsystems erreichen. In Weiterbildung dieses Gedankens wird vorgeschlagen, dass die Plattformkonsole eine Vorderwand, zwei Seitenwände und eine diese verbindende geneigte Rückwand umfasst und nach oben hin von der Plattform abgeschlossen wird.

In diesem Fall bildet also die Plattform eine Seite der verwindungssteif ausgebildeten Plattformkonsole.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
- Figur 1: eine perspektivische Ansicht des Heckbereichs eines Wasserfahrzeugs mit einer erfindungsgemäßen Plattformeinrichtung im angehobenen Zustand;
- Figur 2: eine Figur 1 entsprechende perspektivische Ansicht im abgesenkten Zustand der Plattformeinrichtung;
- Figur 3: eine perspektivische Ansicht des Heckbereichs nach Figur 1 jedoch von unten (ein Z-Antrieb wurde weggelassen);
- Figur 4: eine perspektivische Ansicht der Plattformeinrichtung (ohne Plattform) (mit Blickrichtung schräg nach hinten);
- Figur 5: eine Figur 4 entsprechende Ansicht der Plattformeinrichtung, wobei der obere Tragarm weggelassen wurde;

- Figur 6: eine Figur 4 entsprechende Ansicht der Plattformeinrichtung mit teilweise aufgerissenem oberen Tragarm;
- Figur 7: eine Figur 5 entsprechende Ansicht der Plattformeinrichtung mit teilweise aufgerissenem unteren Tragarm und weggelassenem Hubzylinder;
- Figur 8: eine perspektivische Ansicht der Plattformeinrichtung mit Blickrichtung schräg nach vorne, wobei bei der Plattformkonsole eine Seitenwand und eine geneigte Rückwand sowie die Plattform selbst weggelassen wurde,
- Figur 9: eine Figur 3 entsprechende Ansicht mit einer am unteren Tragarm angeordneten Querstrahlrudereinrichtung (Antriebskomponenten des Wasserfahrzeugs sind nicht dargestellt);
- Figur 10: eine perspektivische Ansicht einer weiteren Ausführungsform der Plattformeinrichtung mit zwei identisch ausgebildeten Tragarmen;
- Figuren 11 a,b: verdeutlichen die Anlenkung der Tragarme bzw. des Hubwerks an die Flanschkonsolen;
- Figur 12: eine perspektivische Ansicht einer weiteren Ausführungsform eines Tragarms und
- Figur 13: eine perspektivische Ansicht eines aufgerissen dargestellten Teils des Tragarms nach Figur 12.

Die Figuren zeigen in verschiedenen Ansichten ein Wasserfahrzeug 2 mit einer angebauten insgesamt mit dem Bezugszeichen 4 bezeichneten Plattformeinrichtung sowie in verschiedenen Ansichten diese Plattformeinrichtung 4. Die Plattformeinrichtung 4 umfasst eine heb- und senkbare Plattform 6 mit einer in allen Hubstellungen im Wesentlichen horizontalen begehbaren Oberfläche 8 und ein parallelogrammförmiges Hubwerk 10, welches einenends die Plattform 6 über eine Plattformkonsole 12 trägt und anderenends vermittels zweier Flanschkonsolen 14 an die Heckpartie des Wasserfahrzeugs 2 angebaut ist.

Das parallelogrammförmige Hubwerk 10 umfasst einen unteren Tragarm 16 und einen oberen Tragarm 18. Beide Tragarme 16, 18 sind von jeweils einer einzigen im Wesentlichen quader- oder kastenförmigen torsionssteifen Struktur 20, 22 gebildet, die in sich schubfeste Seiten umfasst. Auf diese Weise ist der jeweilige Tragarm 16, 18 mit einer hohen Torsionssteifigkeit ausgebildet. Dies bedeutet, dass in Querrichtung 24 verhältnismäßig schmal bauende Hubwerke 10 realisiert werden können, und zwar auch, wenn in Querrichtung 24 verhältnismäßig ausladende Plattformen 6 zum Einsatz kommen.

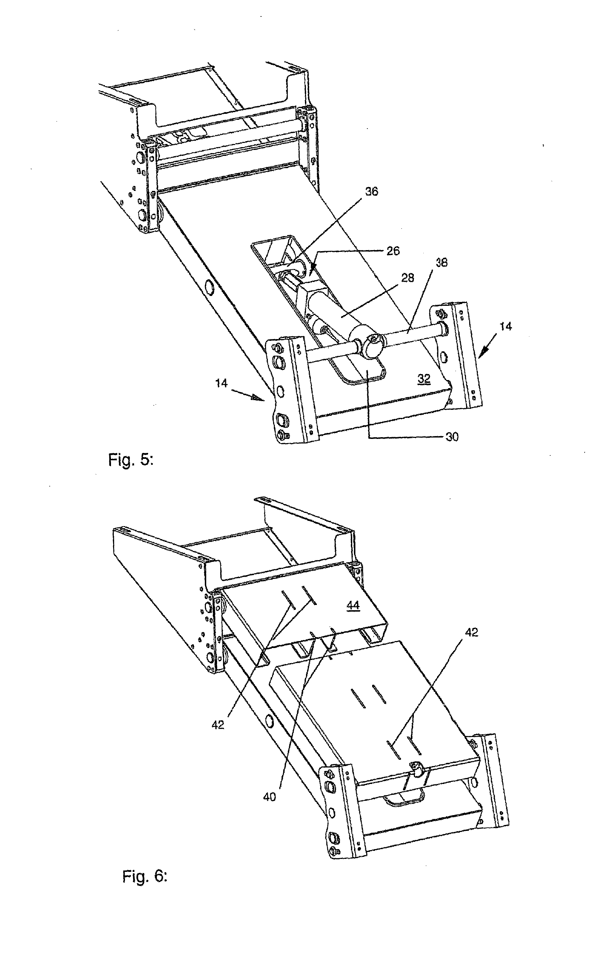

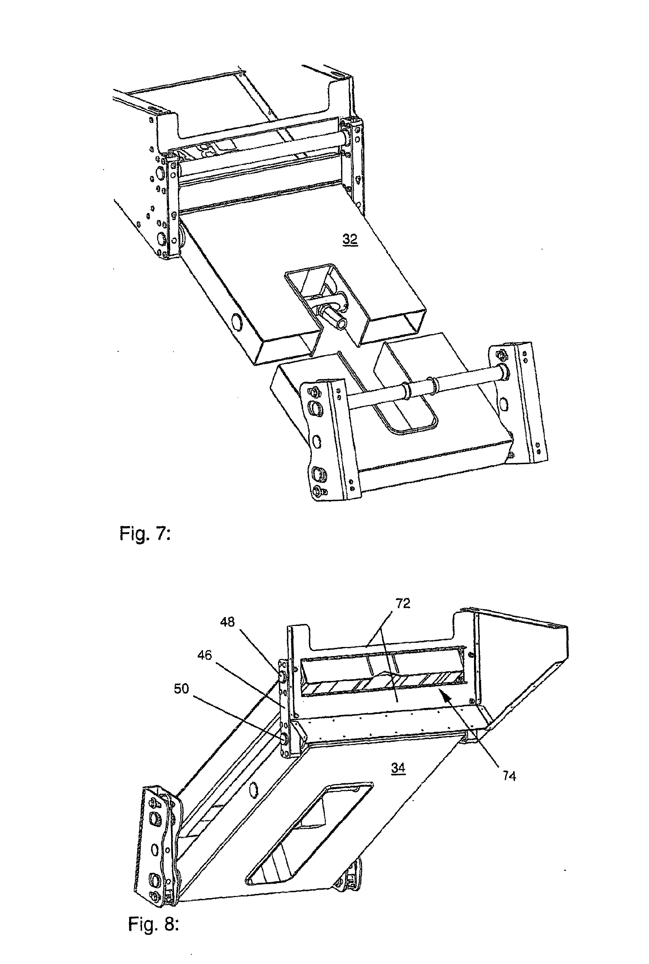

Bei den die Tragarme 16, 18 bildenden torsionssteifen Strukturen 20, 22 handelt es sich jeweils um Hohlkörperstrukturen, die aus den teilweise aufgerissenen Darstellungen der Figuren 6 und 7 ersichtlich sind. Der untere Tragarm 16 umfasst eine ungefähr mittige Öffnung 26, in die ein Hubzylinder 28 eingreift und darin auf noch näher zu beschreibende Weise angelenkt ist. Wie aus Figuren 5, 7 und 8 zu ersehen ist, ist die Öffnung 26 in Umfangsrichtung von einer durchgehenden Wandung 30 begrenzt, die beidseitig etwas über die Oberseite 32 und Unterseite 34 des unteren Tragarms 16 vorsteht und mit einer umlaufenden Kehlschweißnaht fixiert ist. Auf diese Weise wird die Verwindungssteifigkeit des quader- bzw. kastenförmigen unteren Tragarms 16 weiter erhöht. Wie weiter aus Figur 5 ersichtlich ist, erstreckt sich eine Lagerachse 36 für das plattformseitige Ende des Hubzylinders 28 durch den unteren Tragarm 16 und auch durch die die Öffnung 26 begrenzende Wandung 30 hindurch. Auf diese Weise vermag die Wandung 30 die Lagerachse 36 in einem mittigen Abschnitt, wo die Kräfte durch den Hubzylinder 28 eingeleitet werden, zusätzlich gegen Durchbiegen zu stützen.

Anderenends ist das fahrzeugseitige Ende des Hubzylinders 28 über eine durch den anderen Tragarm 18 und durch beide Flanschkonsolen 14 hindurchgehende Lagerachse 38 gestützt.

Wie aus Figur 6 ersichtlich ist, umfasst der obere Tragarm 18 zu fünf Seiten hin flächenhaft erstreckte Wandungsabschnitte und ist nach unten zwar offen, jedoch durch Abkantungen der schmalen Wandungsabschnitte nach innen weiter versteift. Zusätzlich sind im beispielhaft dargestellten Fall zwei in Längsrichtung durchgehende Winkelprofile 40 als Versteifungsmittel vorgesehen. Diese Winkelprofile 40 haben im beispielhaft dargestellten Fall Vorsprünge, die in geschlitzte Ausnehmungen 42 des oberen großen flächenhaften Wandungsabschnitts 44 des Tragarms 18 eingreifen und dort verschweißt sind.

Die vorstehend erwähnte fahrzeugseitige Lagerachse 38 des Hubzylinders 28 (s. Figur 5) erstreckt sich durch Lageröffnungen in den äußeren Wandungsabschnitten des oberen Tragarms 18 und dabei auch durch die in Längsrichtung verlaufenden Winkelprofile 40, und zwar im Bereich der Schweißbefestigung bei Bezugszeichen 42 hindurch. Auf diese Weise vermögen die Winkelprofile 40 die fahrzeugseitige Lagerachse 38 des Hubzylinders 28 ebenfalls gegen Durchbiegen zu stützen.

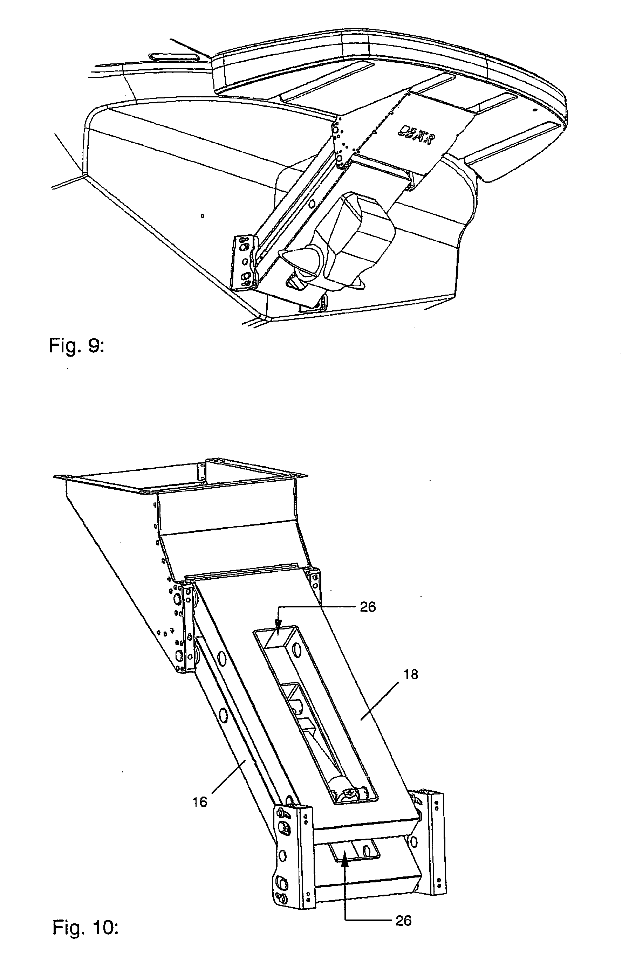

Es sei an dieser Stelle aber darauf hingewiesen, dass die beiden Tragarme 16, 18 auch beide mit einer Öffnung 26 für die Lagerung des Hubzylinders 28 ausgebildet sein können, so wie dies in Figur 10 dargestellt ist. In vorteilhafter Weise können baugleiche Tragarme 16, 18 verwendet werden.

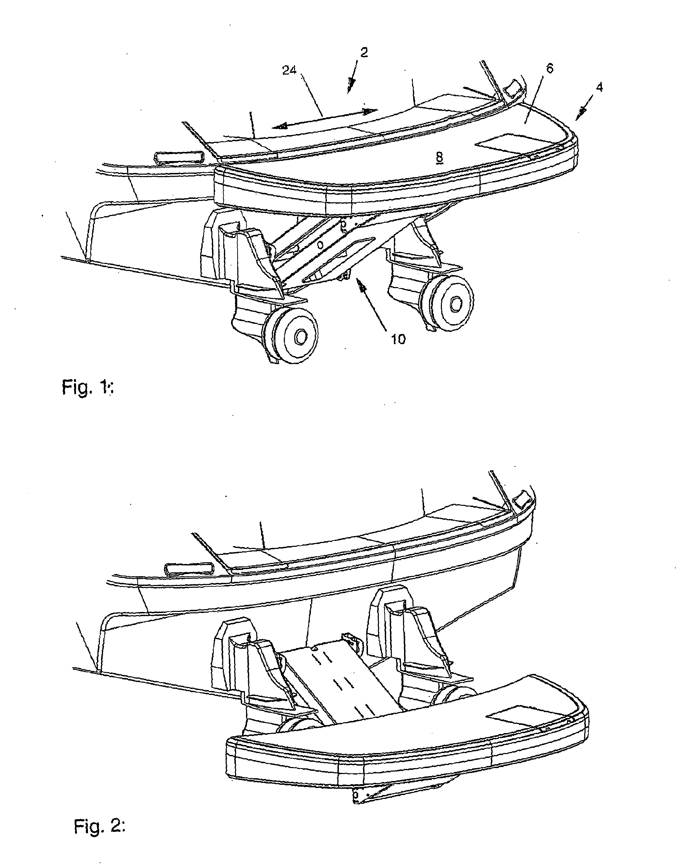

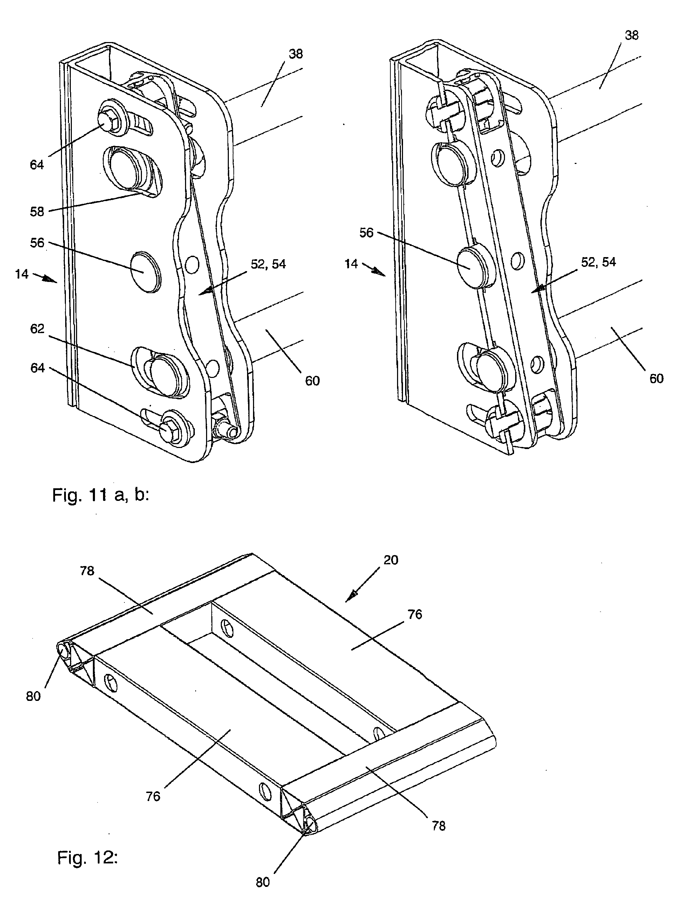

Nachfolgend wird die Anlenkung des parallelogrammförmigen Hubwerks 10 an die Flanschkonsolen 14 unter Bezugnahme insbesondere auf Figur 11 erläutert: Das Hubwerk umfasst wie erwähnt den unteren und den oberen Tragarm 16 bzw. 18, welche eine untere und obere Parallelogrammstrebe bilden. Plattformseitig sind die Tragarme 16, 18, wie am besten aus Figur 8 zu ersehen ist, mit einem die plattformseitige vertikale Parallelogrammstrebe bildenden Hohlprofil oder Massivteil 46 schwenkbar verbunden, und zwar an einem oberen und unteren Parallelogrammpunkt 48 bzw. 50. Die fahrzeugseitige vertikale Parallelogrammstrebe 52 bildet ein wiederum als Hohlprofil oder Massivteil ausgebildetes Basisteil 54, welches jedoch nicht starr, sondern um eine eigene horizontale Schwenkachse 56 mit der betreffenden Flanschkonsole 14 verbunden ist. Der Tragarm 18 ist (bei der Ausführungsform der Figuren 1 bis 9) über die fahrzeugseitige Lagerachse 38 mit dem Basisteil 54 verbunden. Diese Achse 38 erstreckt sich beidseits durch die Flanschkonsole 14 hindurch, und zwar durch eine langlochförmige Öffnung 58. Entsprechend ist bei dem unteren Tragarm 16 eine Lagerachse 60 vorgesehen, die sich gelenkig durch das Basisteil 54 und durch eine weitere langlochförmige Öffnung 62 in der Flanschkonsole 14 hindurch erstreckt. Die Schwenkachsen 38 und 60 bilden also gegenüber dem Basisteil 54 den oberen und unteren fahrzeugseitigen Parallelogrammpunkt. Da jedoch das Basisteil 54 selbst über die eigene Schwenkachse 56 um insbesondere ± 15 bis 45° gegenüber der Flanschkonsole 14 verschwenkbar ist, lässt sich die Plattformeinrichtung 4 an verschieden geneigten Heckpartien befestigen. Die geeignete Neigung des Basisteils 54 bzw. des Hubwerks 10 gegenüber den dann ortsfest fixierten Flanschkonsolen 14 lässt sich dann einjustieren und im beispielhaft dargestellten Fall über Klemmmittel 64 gegenüber den Flanschkonsolen 14 fixieren, so dass die fahrzeugseitige vertikale Parallelogrammstrebe 52 dann für den bestimmungsgemäßen Gebrauch so ausgerichtet ist, dass die Plattform 6 horizontal angeordnet ist.

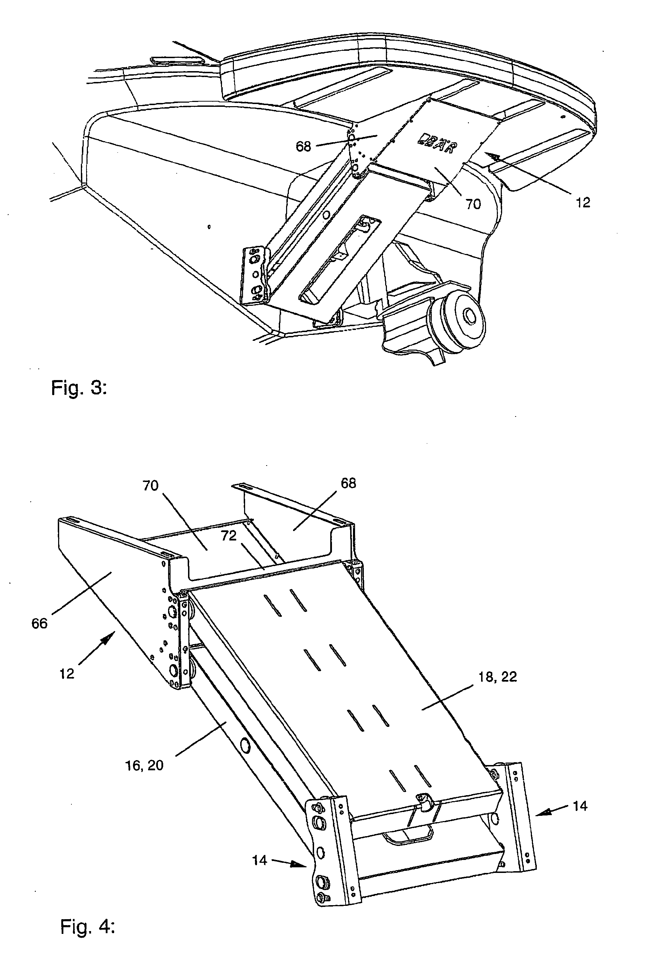

Die eingangs erwähnte Plattformkonsole 12 ist ebenfalls sehr verwindungssteif ausgebildet, was am besten anhand der Figuren 3, 4 und 8 ersehen werden kann. Die Plattformkonsole 12 umfasst zwei flächenhafte, aus Flachmaterial gebildete, an den Seiten abgekantete Seitenwände 66, 68, die im beispielhaft dargestellten Fall in der Seitenansicht dreieckförmig sind. Entsprechend ist eine ebenfalls flächenhafte Rückwand 70 gegen abgekantete Stirnseiten der Seitenwände 66, 68 fixiert. Zum Hubwerk 10 hin umfasst die Plattformkonsole 12 noch eine Vorderwand 72, die eine Öffnung 74 (Figur 8) für den Durchgriff des Endes des oberen Tragarms 18 aufweist. Nach oben hin ist die Plattformkonsole 12 von der Plattform 6 abgeschlossen, so dass die Plattformkonsole 12 insgesamt prismenförmig ausgebildet ist.

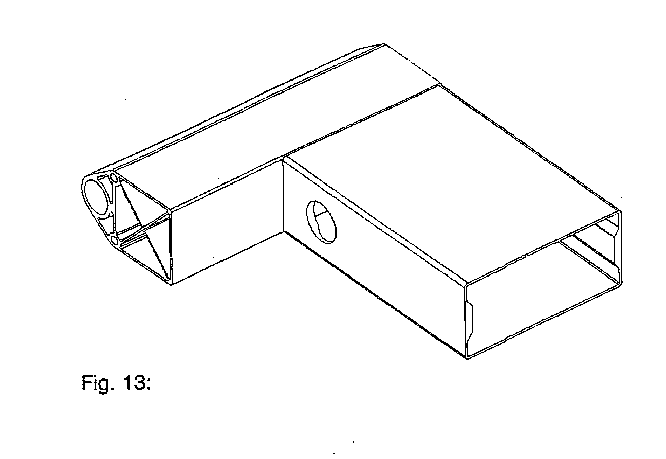

Schließlich zeigen die Figuren 12, 13 in perspektivischer Ansicht eine weitere mögliche Ausführungsform zur Ausbildung einer quader- oder kastenförmigen torsionssteifen Struktur 20 zur Bildung der Tragarme. In diesem Fall ist die torsionssteife Struktur 20 gebildet aus jeweils zwei parallel zueinander und in Längsrichtung erstreckten verwindungssteifen Hohlprofilen 76 und zwei parallel zueinander und in Querrichtung 24 erstreckten Hohlprofilen 78, die starr aneinander gefügt, insbesondere miteinander verschweißt sind. In den beiden in Querrichtung 24 erstreckten Hohlprofilen 78 ist zugleich eine Lagerstelle 80 für den Eingriff oder Durchgriff von Lagerachsen zum Anlenken der Tragarme fahrzeugseitig und plattformseitig ausgebildet. Die so gebildete quader- oder kastenförmige Struktur 20, in der ebenfalls eine Öffnung für den Eingriff und zum Anlenken eines Hubzylinders vorgesehen ist, ist ebenfalls in höchstem Maße verwindungssteif.

## Patentansprüche

1. Plattformeinrichtung (4) mit einer heb- und senkbaren Plattform (6), für den Anbau an ein Fahrzeug, insbesondere an ein Wasserfahrzeug (2), nach Art einer Hubladebühne, mit einem parallelogrammförmigen Hubwerk (10) umfassend ein oberes und einen unteres Tragarmsystem, das einenends an das Fahrzeug anbaubar ist und anderenends die Plattform (6) trägt, die in allen Hubstellungen eine im wesentlichen horizontale begehbare Oberfläche (8) aufweist, **dadurch gekennzeichnet, dass** das untere und/oder das obere Tragarmsystem jeweils von einem einzigen Tragarm gebildet ist, der von jeweils einer einzigen im wesentlichen quader- oder kastenförmigen torsionssteifen Struktur (20, 22) gebildet ist, die in sich schubfeste flächenhaft erstreckte Seiten umfasst, die starr miteinander verbunden oder teilweise einstückig ineinander übergehend ausgebildet sind und so die Torsionssteifigkeit des Tragarms (16, 18) unterstützen.

2. Plattformeinrichtung nach Anspruch 1, **dadurch gekennzeichnet, dass** die im wesentlichen quader- oder kastenförmige torsionssteife Struktur (20, 22) insbesondere nach allen sechs Seiten durch flächenhaft erstreckte Wandungsabschnitte geschlossen ausgebildet oder begrenzt ist.

3. Plattformeinrichtung nach Anspruch 1 oder 2, **dadurch gekennzeichnet, dass** der von der torsionssteifen Struktur (20, 22) gebildete Tragarm (16, 18) zwischen Innenschenkeln zweier Flanschkonsolen (14) der Plattformeinrichtung schwenkbar angelenkt ist.

4. Plattformeinrichtung nach einem oder mehreren der vorstehenden Ansprüche, **dadurch gekennzeichnet, dass** die Tragarme (16, 18) fahrzeugseitig über eine obere und eine untere Schwenkachse (38, 60) schwenkbar mit einem eine fahrzeugseitige vertikale Parallelogrammstrebe (52) des Hubwerks (10) bildenden Basisteil (54) verbunden sind, welches Basisteil (54) gegenüber der Flanschkonsole (14) um eine eigene horizontale Schwenkachse (56) verschwenkbar ist, die zwischen der oberen (38) und der unteren (60) Schwenkachse der Tragarme (16, 18) angeordnet ist.

5. Plattformeinrichtung nach Anspruch 4, **dadurch gekennzeichnet, dass** die obere und die untere fahrzeugseitige Schwenkachse (38, 60) der Tragarme (18, 16) auf demselben Umkreis um die horizontale Schwenkachse (56) des Basisteils (54) liegen.

6. Plattformeinrichtung nach Anspruch 5 oder 6, **dadurch gekennzeichnet, dass** das Basisteil (54) gegenüber der Flanschkonsole (14) stufenlos um wenigstens 5°, um wenigstens 10°, insbesondere um wenigstens 15°, insbesondere um wenigstens 20°, insbesondere um wenigstens 30° um seine horizontale Schwenkachse verschwenkbar ist und in beliebiger Schwenkstellung gegenüber der Flanschkonsole (14) fixierbar ist.

7. Plattformeinrichtung nach einem oder mehreren der vorstehenden Ansprüche, **dadurch gekennzeichnet, dass** in dem von der torsionssteifen Struktur (20) gebildeten Tragarm (16) eine Öffnung (26) ausgebildet ist, in die ein Hubzylinder (28) des Hubwerks (10) eingreift und dort mit seinem plattformseitigen Ende schwenkbar angelenkt ist.

8. Plattformeinrichtung nach Anspruch 7, **dadurch gekennzeichnet, dass** sich durch die Öffnung (26) eine Lagerachse (36) in Querrichtung (24) hindurcherstreckt zum schwenkbaren Anlenken des plattformseitigen Endes des Hubzylinders (28).

9. Plattformeinrichtung nach Anspruch 7 oder 8, **dadurch gekennzeichnet, dass** die Öffnung (26) von im wesentlichen senkrecht zur Öffnungsebene erstreckten Wandungen (30) begrenzt ist, die die Torsionssteifigkeit des Tragarms (16) weiter unterstützen.

10. Plattformeinrichtung nach Anspruch 9, **dadurch gekennzeichnet, dass** diese Wandungen (30) die in Querrichtung (24) durch die Öffnung hindurcherstreckte Lagerachse (36) lagern und stützen.

11. Plattformeinrichtung nach einem oder mehreren der vorstehenden Ansprüche, **dadurch gekennzeichnet, dass** der Hubzylinder (28) mit seinem fahrzeugseitigen Ende an einer durch den anderen Tragarm (18) hindurchgehenden Lagerachse (38) vorgesehen ist oder an einer durch den anderen Tragarm (18) und durch beide Flanschkonsolen (14) hindurchgehenden Lagerachse (38) vorgesehen ist.

12. Plattformeinrichtung nach Anspruch 11, **dadurch gekennzeichnet, dass** die Lagerachse (38) in einem mittigen Abschnitt zusätzlich von dem Tragarm (18) gegen Durchbiegen gestützt ist.

13. Plattformeinrichtung nach einem oder mehreren der Ansprüche 7-12, **dadurch gekennzeichnet, dass** in beiden Tragarmen (16, 18) eine Öffnung (26) zur Aufnahme und Lagerung des Hubzylinders (28) ausgebildet ist, insbesondere beide Tragarme (16, 18) zumindest hinsichtlich der Ausbildung der torsionssteifen Struktur und der Öffnung (26) identisch ausgebildet sind.

14. Plattformeinrichtung nach einem oder mehreren der vorstehenden Ansprüche, **dadurch gekennzeichnet, dass** die im wesentlichen quader- oder kastenförmige torsionssteife Struktur (20) zwei parallel zueinander und in Längsrichtung erstreckte Hohlprofile (76) und zwei parallel zueinander und in Querrichtung (24) erstreckte Hohlprofile (78) umfasst, die starr aneinander gefügt sind.

15. Plattformeinrichtung nach einem oder mehreren der vorstehenden Ansprüche, **dadurch gekennzeichnet, dass** das Hubwerk (10) auf seiner fahrzeugabgewandten Seite mit einer Plattformkonsole (12) für die begehbare Plattform (6) verbunden ist und diese trägt und dass die Plattformkonsole (12) verwindungssteif mit in sich schubfesten Seiten ausgebildet ist, wobei die Plattformkonsole (12) vorzugsweise eine Vorderwand (72), zwei Seitenwände (66, 68) und eine diese verbindende geneigte Rückwand (70) umfassen kann und nach oben hin von der Plattform (6) abgeschlossen wird.
